# EUROPEAN PATENT SPECIFICATION

(11) **EP 4 296 442 B1**
(45) Date of publication and mention of the grant of the patent: **12.03.2025**
(21) Application number: 23180762.9
(22) Date of filing: 21.06.2023
(51) Int. Cl.: E03C 1/10, E03D 1/00, E03D 5/02

(54) **DEVICE FOR PREVENTING SIPHONAGE AND OVERFLOW, TOILET WATER PASSAGE SYSTEM, AND TOILET**
VORRICHTUNG ZUR VERHINDERUNG VON RÜCKSAUGEN UND ÜBERLAUF, TOILETTENWASSERLEITUNGSSYSTEM UND TOILETTE
DISPOSITIF POUR EMPÊCHER UN SIPHONNAGE ET UN DÉBORDEMENT, SYSTÈME DE PASSAGE D'EAU DE TOILETTES ET TOILETTES

(30) Priority: 21.06.2022 CN 202210705682
(43) Date of publication of application: 27.12.2023
(73) Proprietor: Komoo Intelligent Technology Co., Ltd., Xiamen City, Fujian 361000 (CN)
(72) Inventor: LIN, Xiaofa, Xiamen City, Fujian 361000 (CN); LIN, Xiaoshan, Xiamen City, Fujian 361000 (CN); LIN, Shan, Xiamen City, Fujian 361000 (CN); XU, Yanxin, Xiamen City, Fujian 361000 (CN); LIU, Zuhua, Xiamen City, Fujian 361000 (CN)
(74) Representative: Verscht, Thomas Kurt Albert

(56) References cited:
- US-A- 2 023 178
- US-A- 2 250 291

## Description

### FIELD OF THE DISCLOSURE

The present disclosure relates to a toilet tank and in particular relates to a device for preventing siphonage and overflow, a toilet water passage system and a toilet.

### BACKGROUND OF THE DISCLOSURE

In the toilet industry, in order to protect a water source from pollution, a (back) siphonage prevention device needs to be added to a toilet waterway to prevent external sewage from being sucked backward to the water source due to a negative pressure of the toilet waterway. Throughout this specification the terms "siphon", "siphonage" and "back siphonage" can be used interchangeably and are considered to have the same meaning. Particularly regarding the term "back siphonage" we would like to draw attention to the English language Wikipedia article regarding the term "siphon" which is incorporated herein by reference and which states "...Back siphonage is a plumbing term applied to the reversal of normal water flow in a plumbing system due to sharply reduced or negative pressure on the water supply side, such as high demand on water supply by fire-fighting; it is not an actual siphon as it is suction. Back siphonage is rare as it depends on submerged inlets at the outlet (home) end and these are uncommon. Back siphonage is not to be confused with backflow; which is the reversed flow of water from the outlet end to the supply end caused by pressure occurring at the outlet end. Also, building codes usually demand a check valve where the water supply enters a building to prevent backflow into the drinking water system..." (retrieved from the Internet https://en.wikipedia.org/wiki/Siphon on June 20, 2023). An overflow device is added to set a safe and effective water exhausting method for protecting electrical components in a toilet and safety standard requirements, especially for a scene with many electrical components in a smart toilet, more attention should be paid to safety issues in a water system of the toilet to avoid overflow, causing the electrical components being damaged and being damped.

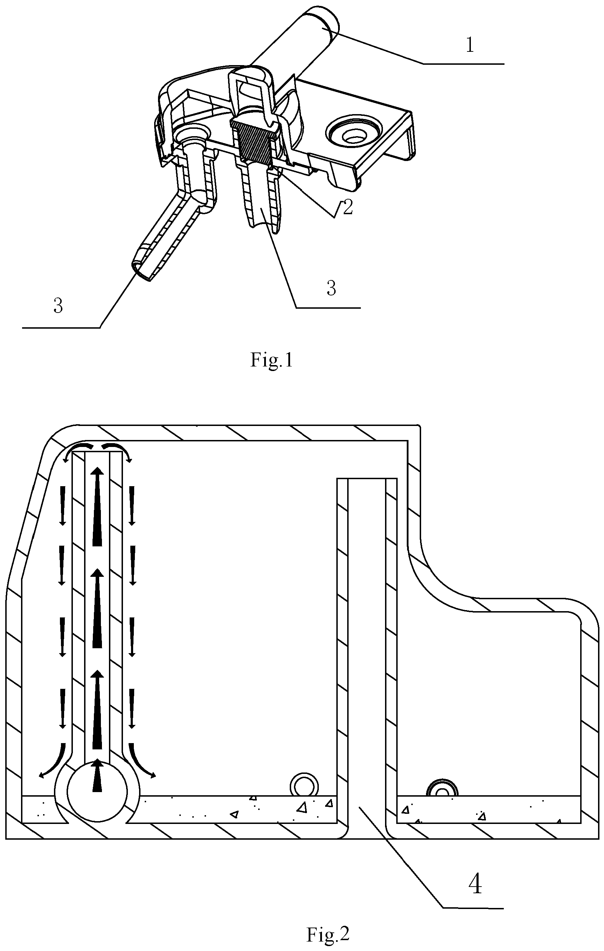

In internal components of a toilet cover, two components of a siphonage prevention component and the overflow device are generally respectively developed for siphonage prevention and overflow functions. Referring Fig. 1, a suction opening 1 of the siphonage prevention assembly is smaller, and a tolerated sudden negative pressure is weaker. In a low water pressure state, water flows from the water inlet 2, a membrane sheet height lifted by a water pressure is not enough, an air suction opening 1 is not hermetically sealed, causing the water overflowing. Referring to Fig. 2, the overflow device is generally integrated on a water tank assembly, an exhausting rate of the overflow opening 4 is also smaller, and a height of the overflow opening 4 is generally required to be higher than a ceramic surface to effectively exhaust water. When the overflow opening 4 is lower than the ceramic surface, and the overflow opening 4 cannot completely empty overflowing water. The existing structure for the siphonage prevention and the overflow limits an water exhausting position of a base, and a general versatility is poor.

US2023178A discloses a backflow prevention device preventing backflow due to underpressure in the water supply line. The backflow prevention device comprises a cover with holes and a water outlet in the base. US2250291A shows another vacuum breaker device preventing siphoning.

### BRIEF SUMMARY OF THE DISCLOSURE

The objective of present disclosure is to provide a device for preventing siphonage and overflow to solve the deficiencies in the existing techniques.

In order to achieve the objective, a technical solution of the present disclosure is as follows.

A device for preventing siphonage and overflow, it is configured to be disposed on a water tank of a toilet, it comprises an upper cover and a lower base, the upper cover is disposed on the lower base to define a cavity with an inner portion of the lower base, the upper cover comprises a cover body, a water inlet, an air opening and a first flow transmission structure, the water inlet and the air opening are both disposed on the cover body, the first flow transmission structure is disposed below the cover body, the lower base comprises a lower base body, a water outlet, an air exhausting opening, one or more overflow openings and a second flow transmission structure, the water outlet and the air exhausting opening are disposed on a bottom of the lower base body and are in communication with an inner portion of the water tank, the second flow transmission structure is disposed below the first flow transmission structure, in a normal water inflow process, water from the water inlet flows into the cavity and flows into the inner portion of the water tank through the first flow transmission structure, the second flow transmission structure and the water outlet in sequence, and air in the water tank flows into the cavity through the air exhausting opening and is exhausted through the one or more overflow openings and the air opening; when the overflow occurs in the water tank and a water level is higher than the one or more overflow openings, the water is exhausted from the one or more overflow openings.

Preferably, the first flow transmission structure comprises an aqueduct, the aqueduct is disposed below the water inlet, a bottom of the aqueduct comprises a water transmission surface and an opening, and two sides of the bottom of the aqueduct comprises shielding plates.

Preferably, a connection plate is disposed between the aqueduct and the cover body, a side of the connection plate facing the water inlet defines a recess, and a space for a given position is defined between the recess and the water inlet.

Preferably, the second flow transmission structure comprises a mild-flowing grid and a mild-flowing passage, the mild-flowing grid comprises a plurality of partition plates protruding from a side wall of the lower base body, the plurality of partition plates are partitioned to define a grid structure, a bottom of the grid structure is in communication with the mild-flowing passage, and an end of the mild-flowing passage is connected to the water outlet.

Preferably, an edge of the opening of the aqueduct extends downward to define a water shielding rib, and the water shielding rib is configured to guide the water in the aqueduct to the mild-flowing grid.

Preferably, a bottom of the lower base is partitioned to define the air exhausting opening and the water outlet by a rib, and a top of the rib is higher than a bottom surface of the mild-flowing passage.

Preferably, the one or more overflow openings comprise a first overflow opening, and the first overflow opening is disposed on a side of a top of the lower base body and maintains constantly open.

Preferably, the one or more overflow openings further comprise a second overflow opening, a third overflow opening and a fourth overflow opening disposed below the first overflow opening, the first overflow port is a large-diameter overflow opening, the second overflow opening, the third overflow opening and the fourth overflow opening are all small-diameter overflow openings, and the second overflow opening, the third overflow opening and the fourth overflow opening are configured to be selectively opened or closed.

Preferably, the cover body is connected to the lower base body by a snap connector, and a sealing ring is disposed between the bottom of the lower base body and the water tank.

A toilet water passage system, it comprises a water inlet pipeline, a water tank and the device for preventing the siphonage and the overflow according to any one or more of claims 1-9, the water inlet pipeline is connected to the water inlet, and the bottom of the lower base body is connected to the water tank.

The toilet, it comprises a toilet body, it further comprises the toilet water passage system according to claim 10, and the toilet water passage system is disposed on the toilet body.

Compared with the existing techniques, the present disclosure has the following advantages.
(1) The device for preventing the siphonage and the overflow of the present disclosure can integrate two functions of preventing the siphonage and preventing the overflow into one structure to satisfy a more severe water source environment, an effect for preventing the overflow is better, a function for preventing the siphonage is stronger, and water inflow is quieter.
(2) The device for preventing the siphonage and the overflow of the present disclosure widens an application range of the water tank, the water tank can be disposed at a lower position, thereby improving a possibility of an internal layout of a toilet.
(3) The device for preventing the siphonage and the overflow of the present disclosure comprises an air exhausting opening and a plurality of air exhausting passages to improve an efficiency of water inflow, and it can be further normally operated under a condition of a large flow rate of water.

### BRIEF DESCRIPTION OF THE DRAWINGS

Fig. 1 illustrates a view of an overflow prevention device of the existing techniques;
Fig. 2 illustrates a view of a siphonage prevention device of the existing techniques;
Fig. 3 illustrates an exploded view of a device for preventing siphonage and overflow of Embodiment 1 of the present disclosure;
Fig. 4 illustrates an assembling view of the device for preventing the siphonage and the overflow of Embodiment 1 of the present disclosure;
Fig. 5 illustrates a view of an upper cover of the device for preventing the siphonage and the overflow of Embodiment 1 of the present disclosure;
Fig. 6 illustrates a cross-sectional view of the upper cover of the device for preventing the siphonage and the overflow of Embodiment 1 of the present disclosure, wherein A is a space for a given position;
Fig. 7 illustrates a view of a lower base of the device for preventing the siphonage and the overflow of Embodiment 1 of the present disclosure;
Fig. 8 illustrates an assembling view between the device for preventing the siphonage and the overflow and a water tank of Embodiment 1 of the present disclosure;
Fig. 9 illustrates a first view of flow directions of a water passage and an air passage of the device for preventing the siphonage and the overflow of Embodiment 1 of the present disclosure during a normal water inflow process;
Fig. 10 illustrates a second view of the flow directions of the water passage and the air passage of the device for preventing the siphonage and the overflow of Embodiment 1 of the present disclosure during the normal water inflow process;
Fig. 11 illustrates a view of the flow directions of the water passage and the air passage of the device for preventing the siphonage and the overflow of Embodiment 1 of the present disclosure in a state without an air exhausting opening during the normal water inflow process; this embodiment is not encompassed by the appended claims.
Fig. 12 illustrates a view of the flow directions of the water passage and the air passage of the device for preventing the siphonage and the overflow of Embodiment 1 of the present disclosure in a state with the air exhausting opening during the normal water inflow process;
Fig. 13 illustrates a view of the flow directions of the water passage and the air passage of the device for preventing the siphonage and the overflow of Embodiment 1 of the present disclosure during an overflowing process;
Fig. 14 illustrates a view of the flow directions of the water passage and the air passage of the device for preventing the siphonage and the overflow of Embodiment 1 of the present disclosure during a siphoning process;
Fig. 15 illustrates a view of the device for preventing the siphonage and the overflow of Embodiment 1 of the present disclosure applied to a smart toilet;
Fig. 16 illustrates a view of the device for preventing the siphonage and the overflow of Embodiment 1 of the present disclosure disposed on a base module of the smart toilet;
FIG. 17 illustrates an enlarged view of a section B of FIG. 16;
Fig. 18 illustrates a first view of the device for preventing the siphonage and the overflow of Embodiment 2 of the present disclosure;
Fig. 19 illustrates a second view of the device for preventing the siphonage and the overflow of Embodiment 2 of the present disclosure;
Fig. 20 illustrates a first view of flow directions of a water passage and an air passage of the device for preventing the siphonage and the overflow of Embodiment2 of the present disclosure during a normal water inflow process;
Fig. 21 illustrates a second view of the flow directions of the water passage and the air passage of the device for preventing the siphonage and the overflow of Embodiment 2 of the present disclosure during the normal water inflow process;
Fig. 22 illustrates a view of the flow directions of the water passage and the air passage of the device for preventing the siphonage and the overflow of Embodiment 2 of the present disclosure during an overflowing process when only a first overflow opening is opened;
Fig. 23 illustrates a view of the flow directions of the water passage and the air passage of the device for preventing the siphonage and the overflow of Embodiment 2 of the present disclosure during an overflowing process when a second overflow opening is opened;

Characters: upper cover 100; cover body 101; water inlet 102; air opening 103; first flow transmission structure 104; aqueduct 105; connection plate 106; water shielding rib 107; lower base 200; lower base body 201; water outlet 202; air exhausting opening 203; first overflow opening 204; second flow transmission structure 205; mild-flowing grid 206; mild-flowing passage 207; second overflow opening 208; third overflow opening 209; fourth overflow opening 210; and water tank 300.

### DETAILED DESCRIPTION OF THE EMBODIMENTS

The present disclosure will be further described below in combination with the accompanying drawings and embodiments. The accompanying drawings of the present disclosure are merely used to make an outline to facilitate the present disclosure to be easily understood, and a specific proportion thereof can be adjusted according to design requirements.

### Embodiment 1

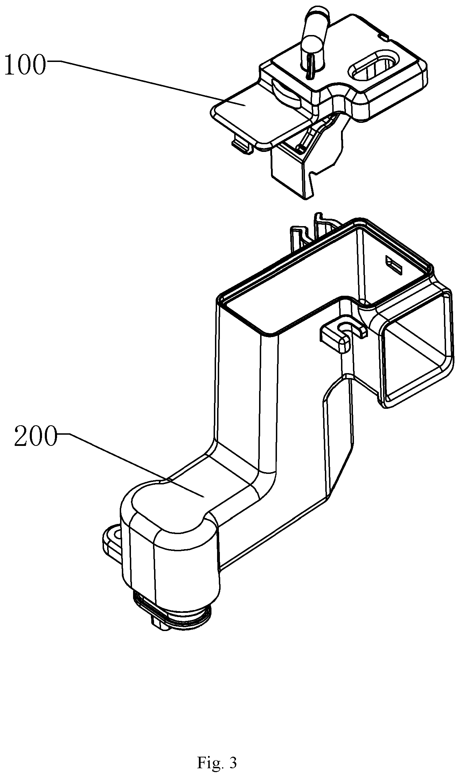

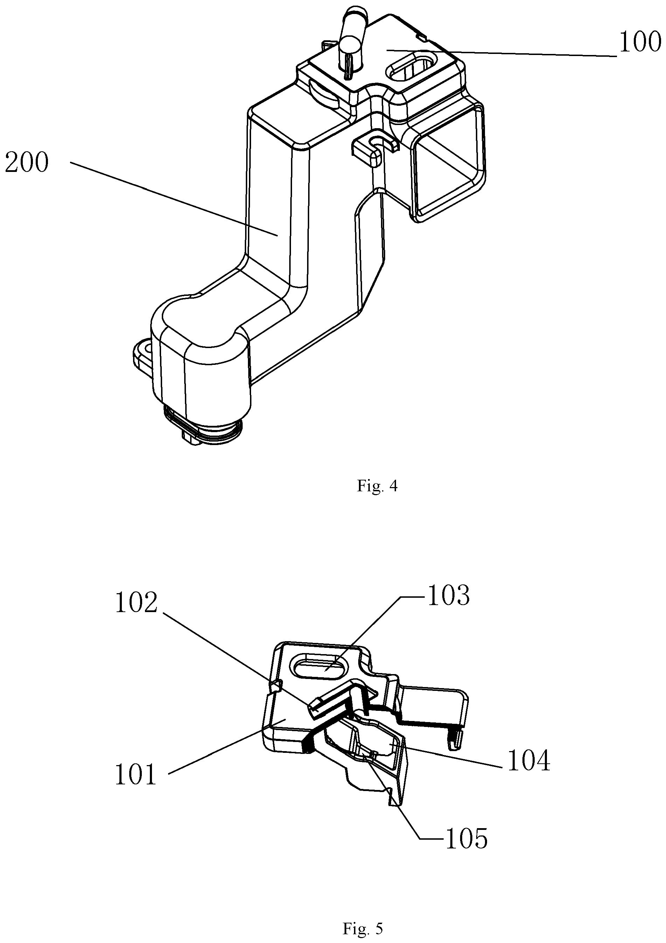

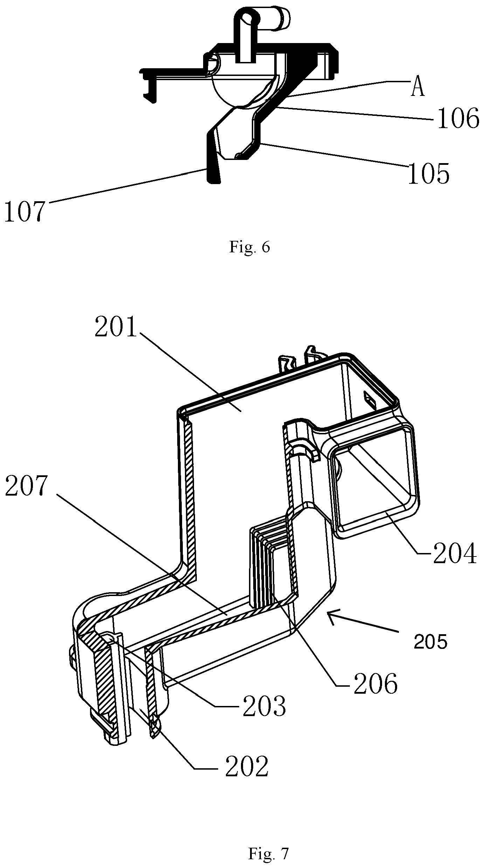

Referring to Figs. 3 and 4, 3-4, an embodiment of the present disclosure provides a device for preventing siphonage and overflow, it comprises an upper cover 100 and a lower base 200, the upper cover 100 is disposed on the lower base 200 to define a cavity with an inner portion of the lower base 200, a cover body 101 is connected to a lower base body 201 by a snap connector, the lower base 200 is disposed on a water tank 300, a sealing ring is disposed between a bottom of the lower base body 201 and the water tank 300, and a good sealing performance is guaranteed between the lower base 200 and the water tank 300 by an interference fit of the sealing ring. In other embodiments, the cover body 101 can be also connected to the lower base body 201 by threads and other means, and the bottom of the lower base body 201 can be also connected to the water tank 300 by other means. Referring to Figs. 5 and 6, the upper cover 100 comprises the cover body 101, a water inlet 102, an air opening 103 and a first flow transmission structure 104, the water inlet 102 and the air opening 103 are both disposed on the cover body 101, the air opening 103 is disposed next to the water inlet 102, the two can be in communication with each other in the cavity, air pressure in the cavity can maintain balance to avoid a siphonage phenomenon and to guarantee no negative pressure to be formed in the cavity due to an existence of the air opening 103, and water in the water tank 300 will not be sucked backward into the water inlet 102 to pollute a water source. The first flow transmission structure 104 is disposed below the cover body 101, in detail, the first flow transmission structure 104 comprises an aqueduct 105, a connection plate 106 and a water shielding rib 107, the aqueduct 105 is disposed below the water inlet 102, water from the water inlet 102 is configured to directly flow into the aqueduct 105, in detail, a bottom of the aqueduct 105 comprises a water transmission surface and an opening, two sides of the bottom of the aqueduct 105 comprise shielding plates. The water transmission surface of the aqueduct 105 can be a stepped surface defined by a plurality of planes and inclined to the opening, the shielding plates on the two sides are combined with the water transmission surface to enable the water to flow out from the opening, and an edge of the opening of the aqueduct 105 extends downward to define the water shielding rib 107, the aqueduct 105 guarantees water from flowing into other parts of the cavity, a direction of water flow is restricted due to shielding of the water shielding rib 107, so that the water flow downwardly flows out. The connection plate 106 is disposed between the aqueduct 105 and the cover body 101, a side of the connection plate 106 facing the water inlet 102 comprises a recess, and a space A for a given position is defined between the recess and the water inlet 102. The space for the given position with a certain distance is disposed below the water inlet 102 to ensure the water flow to effectively flow away without forming water accumulation under a high-pressure and high-speed jet water inflow state of the water inlet 102, which meets the standards of some specific countries.

In a detailed embodiment, referring to Fig. 7, the lower base 200 comprises the lower base body 201, a water outlet 202, an air exhausting opening 203, one or more overflow openings and a second flow transmission structure 205, and the second flow transmission structure 205 is disposed below the first flow transmission structure 104 to enable the water to directly flow into the second flow transmission structure 205 through the first flow transmission structure 104. In detail, the second flow transmission structure 205 comprises a mild-flowing grid 206 and a mild-flowing passage 207, and the water shielding rib 107 is configured to guide the water in the aqueduct 105 to the mild-flowing grid 206. The mild-flowing grid 206 comprises a plurality of partition boards or plates protruding from a side wall of the lower base body 201, and the plurality of partition boards or plates are partitioned to define a grid structure, the grid structure is configured to divide the water flow, a bottom of the grid structure is in communication with the mild-flowing passage 207, divided water flows to the mild-flowing passage 207 that is mild, a flow rate can be reduced to achieve a mild outflow, an end of the mild-flowing passage 207 is connected to the water outlet 202, and the water finally flows into the water tank 300 through the water outlet 202. The one or more overflow openings comprise a first overflow opening 204, and the first overflow opening 204 is disposed on a side of a top of the lower base body 201 and maintains in a constantly open state. In detail, the first overflow opening 204 is a large-diameter overflow opening, and a bottom of the first overflow opening 204 extends into the cavity to define a flow transmission plate without interfering with the upper cover 100, and the flow transmission plate is configured to guide overflowing water to flow out of the first overflow opening 204. The first overflow opening 204 is configured to enable the water to overflow from the first overflow opening 204 when overflow occurs and is also configured to be used as an outlet for exhausting air during a normal water inflow process. As the air opening 103 is disposed next to the water inlet 102 above the cover body 101 to enable air pressures inside and outside of the cavity to maintain consistent, negative pressure is avoided, siphonage-prevention function is achieved, a setting of the one or more overflow openings is configured to also play an overflow-prevention function, therefore, the device for preventing the siphonage and the overflow has two functions of preventing the siphonage and the overflow at the same time.

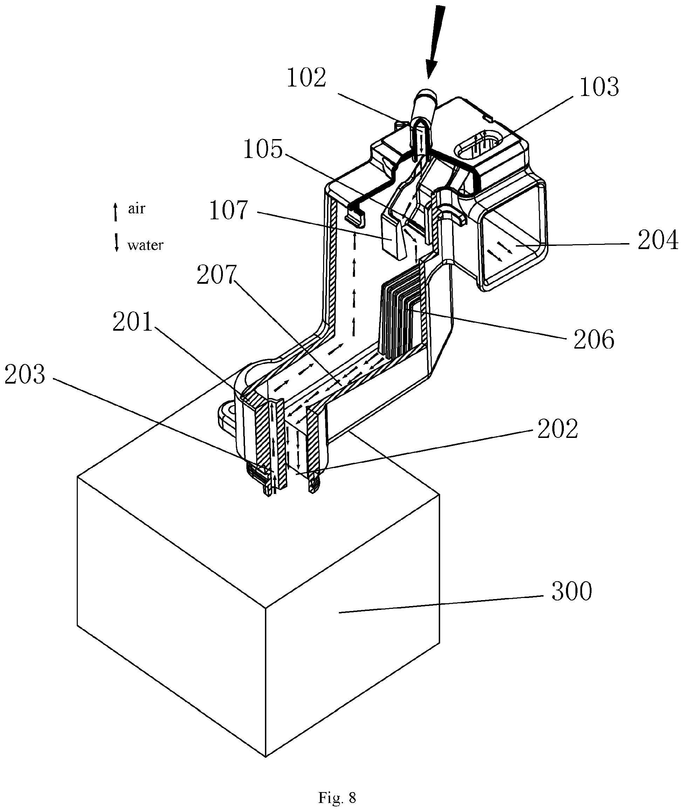

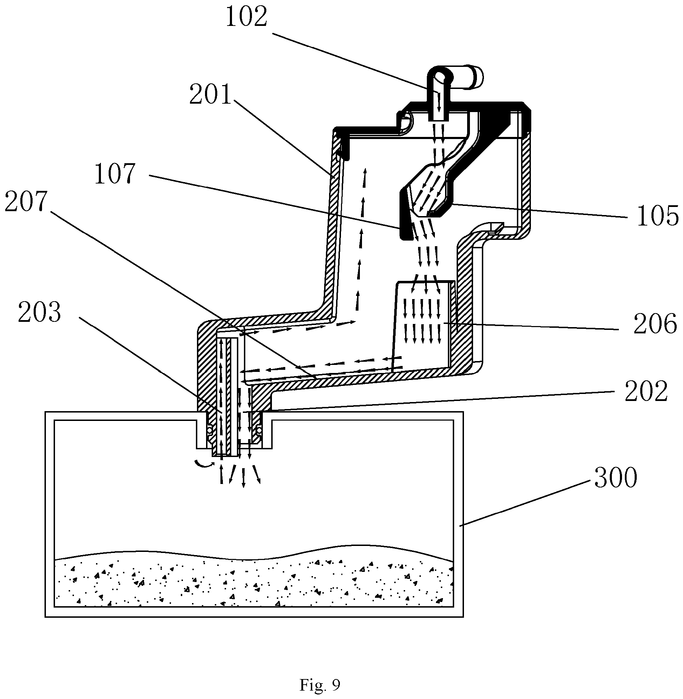

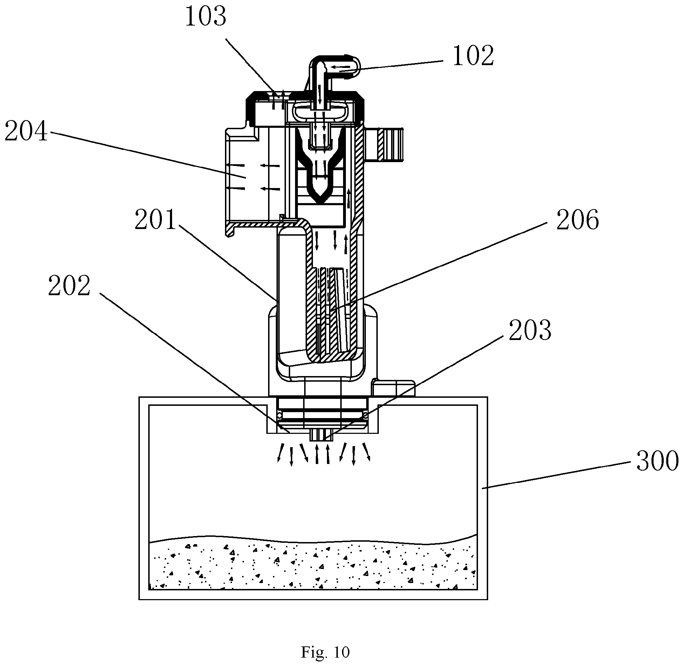

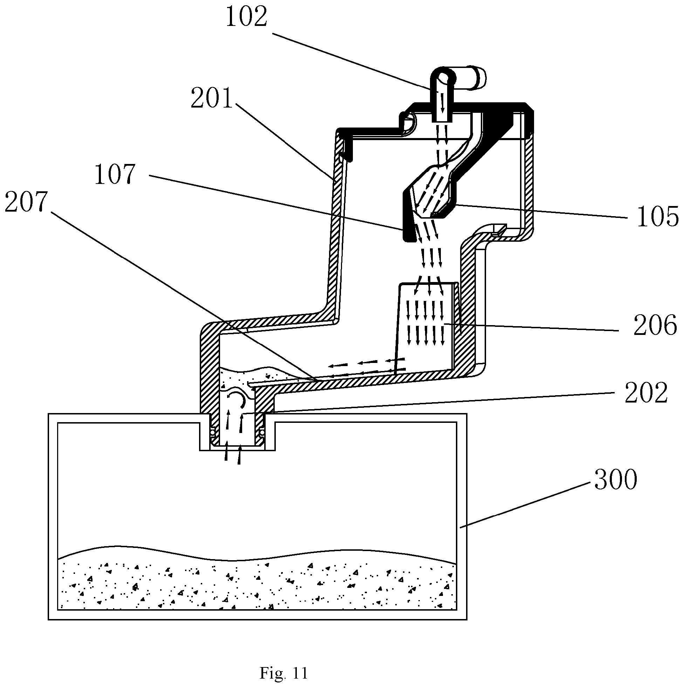

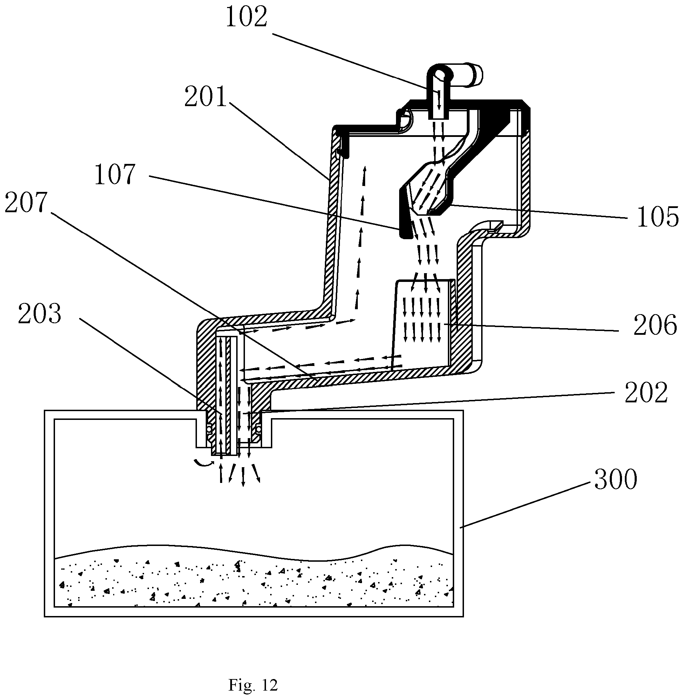

In a specific embodiment, referring to Figs. 8-10, the water outlet 202 and the air exhausting opening 203 are disposed on the bottom of the lower base body 201 and are in communication with an inner portion of the water tank 300, the air exhausting opening 203 and the water outlet 202 are partitioned by a rib, and a top of the rib is higher than a bottom surface of the mild-flowing passage 207. When the water flow is larger, the water outlet 202 is blocked by water, and air in the water tank 300 is configured to be smoothly exhausted through the air exhausting opening 203, a height of the rib surrounding to define the air exhausting opening 203 is higher than a bottom surface through which the water flows to ensure the water to flow into the water outlet 202 without overflowing the height of the rib to affect a normal air exhaustion. Referring to Figs. 11 and 12, Fig. 11 illustrates a state of air exhaustion and water exhaustion without the air exhausting opening 203, when the water flow from the water inlet 102 is larger, it is easy to cause the water outlet 202 to accumulate water, accumulated water will prevent the air in the water tank 300 from being exhausted, resulting in water inflow of the water tank 300 being blocked, and water inflow efficiency is affected. This embodiment is not in accordance with the appended claims. In a serious situation, the water from the water inlet 102 continuously flows in with a large flow rate, however, the water flows into the water tank 300 with a small flow rate due to poor air exhaustion, until a state in which the water tank 300 is not full, while the accumulated water inside of the cavity is full to cause overflow, resulting in a state of continuous inflow of the water and overflowing. Fig. 12 illustrates a state of air exhaustion and water exhaustion with the air exhausting opening 203. The air in the water tank 300 is smoothly exhausted through the air exhausting opening 203, the water smoothly flows into the water tank 300 along the water outlet 202, so that the water and the air independently flow in separate passages without interference with each other, and it can be seen that a design of the air exhausting opening 203 fully guarantees smooth water inflow and air exhaustion of the water tank 300 .

Referring to Figs. 8-10, in the normal water inflow process, a direction of a water passage is as follows: the water from the water inlet 102 flows into the cavity and flows into the water tank 300 through the first flow transmission structure 104, the second flow transmission structure 205 and the water outlet 202 in sequence. A direction of an air passage is as follows: the air in the water tank 300 flows into the cavity through the air exhausting opening 203 and is exhausted through the one or more overflow openings and the air opening 103. The normal water inflow process is that the water is injected into the water tank 300 using the device for preventing the siphonage and the overflow, and the water in the water tank 300 can be normally exhausted without overflow, etc. In detail, the water from the water inlet 102 flows into the cavity, the aqueduct 105 receives the water jetted from a pipe, the water flows out along the aqueduct 105, the aqueduct 105 guarantees that the water cannot flow to other parts of the cavity, the water flows into the mild-flowing grid 206 due to a blocking by the water shielding rib 107, the mild-flowing grid 206 divides turbulent water into multiple small water flow, a flow rate is also reduced, water inflow noise is also reduced at the same time, the water flow flowing into the mild-flowing grid 206 defines relative mild water flow to flow out along the mild-flowing passage 207, then flows out from the water outlet 202, and flows into the water tank 300.

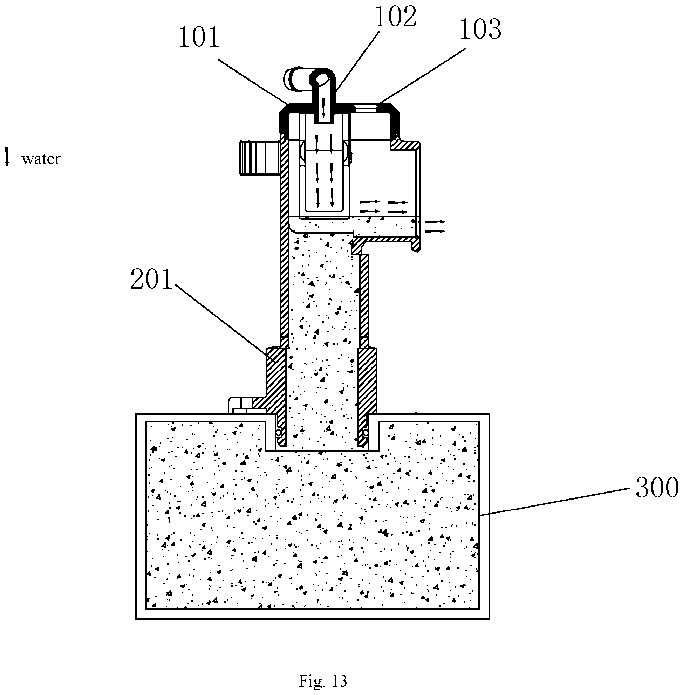

Referring to Fig. 13, a process for preventing the overflow is as follows: when the overflow occurs in the water tank 300 and a water level is higher than the one or more overflow openings, the water can be exhausted from the one or more overflow openings. When a system failure occurs, or other factors cause the water from the water inlet 102 continuously flow in, while the water tank 300 cannot discharge water, the water level continuously rises until the water level is higher than the one or more overflow openings, and the water higher than the one or more overflow openings flows out from the one or more overflow openings. When the water source is under high pressure, the water from the water inlet 102 continuously jets in at high pressure and high speed, the one or more overflow openings with a large diameter can effectively exhaust the water by overflowing, so that the water can only flow away along a preset overflow passage. The first overflow opening 204 is disposed on the side of the top of the lower base body 201, so that the water level can rise to a certain height before overflowing.

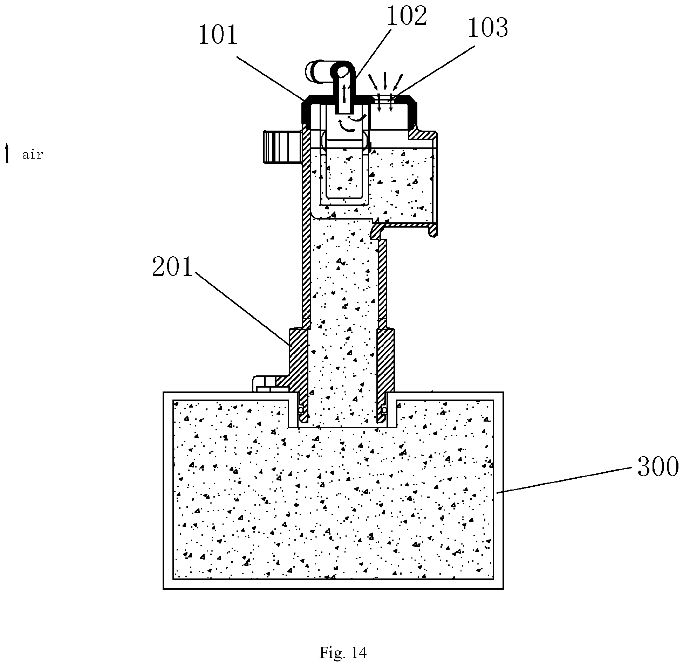

Referring to Fig. 14, a process for preventing the (back) siphonage is as follows: when the system failure occurs, or the one or more overflow openings is blocked due to other factors, or the water is polluted, at the same time, the water source defines a negative pressure, when the water inlet 102 sucks backward, the air opening 103 can effectively supplement the air to enable the air pressures inside and outside the cavity to maintain consistent so as to ensure that no negative pressure is formed in the cavity, and the water in the water tank 300 will not be sucked backward to the water inlet 102 to pollute the water source. If a space near the water inlet 102 does not provides a given position, water droplets may adhere to a surface, when the water inlet 102 sucks air under the negative pressure, possibly resulting in adhered water droplets nearby be sucked backward into a pipeline. The air opening 103 above the cover body 101 is used as one of the passages for exhausting air in the normal water inflow process, when the water source forms a negative pressure, external air can be sucked into the cavity, so that the air pressures inside and outside the cavity is consistent, a (back) siphonage phenomenon is avoided to satisfy a more severe water source environment, an effect for preventing the overflow is better, a function for preventing the (back) siphonage is stronger, and water inflow is quieter.

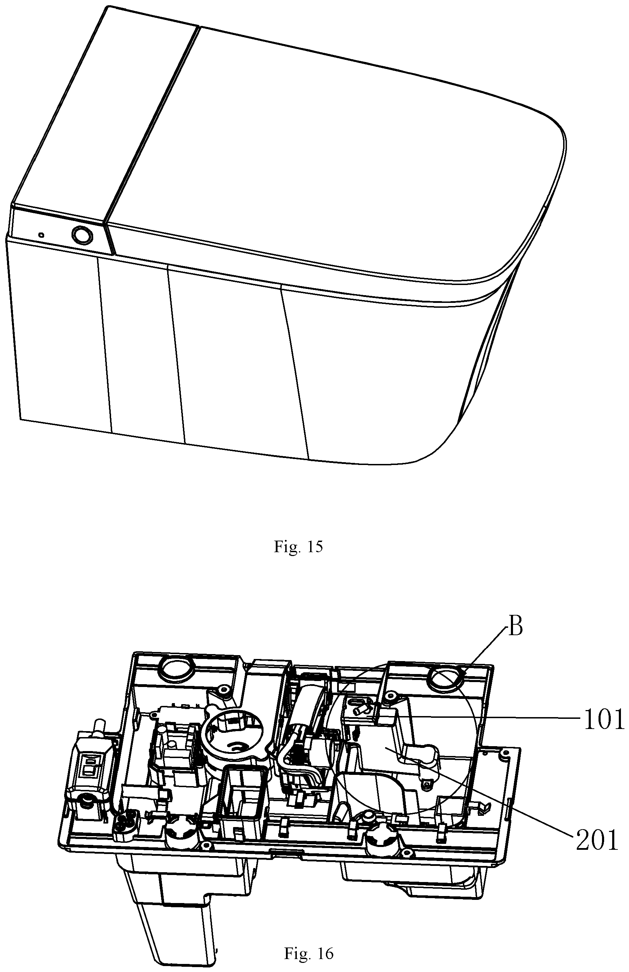

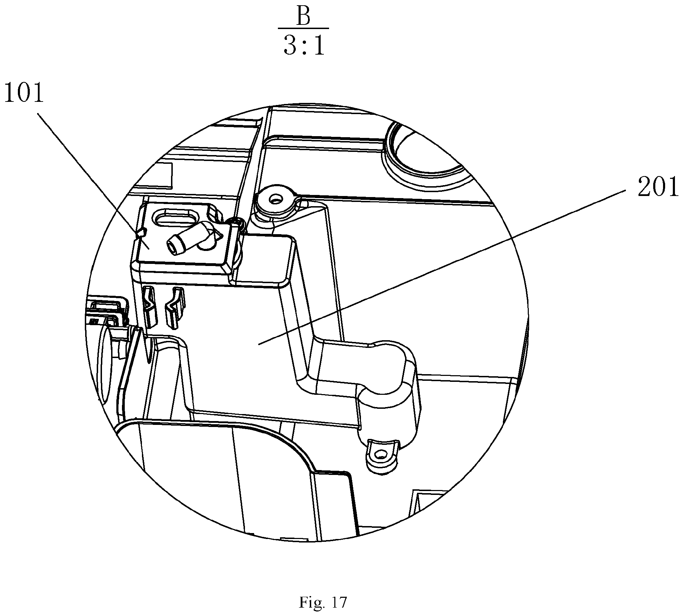

A toilet water passage system of the present disclosure comprises a water inlet pipeline, the water tank 300 and the device for preventing the siphonage and the overflow, the water inlet pipeline is connected to the water inlet 102, and the bottom of the lower base body 201 is connected to the water tank 300. Referring to Figs. 15-17, on a smart toilet, the device for preventing the siphonage and the overflow is integrated on a base module and is configure to be fixed on the base module by screw bolts or other means.

Referring to Fig. 15, a toilet of the present disclosure comprises a toilet body and also comprises the toilet water passage system, and the toilet water passage system is disposed on the toilet body. On the smart toilet, the toilet water passage system is disposed on a toilet base.

In the toilet of the present disclosure, a working process for preventing the overflow and the siphonage is described as above and will not be further described here.

### Embodiment 2

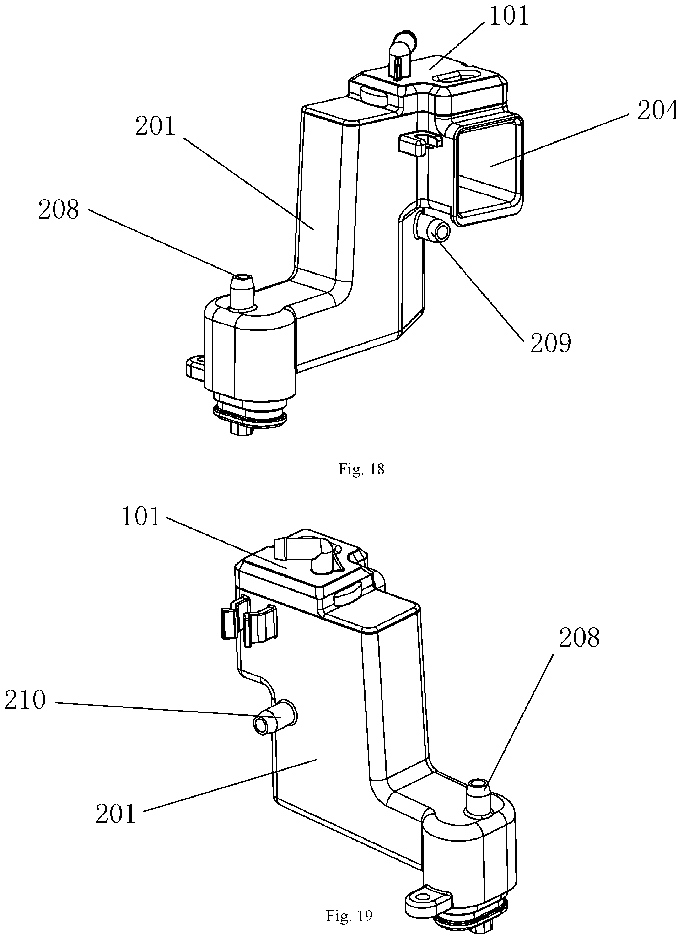

Referring to Figs. 18 and 19, Embodiment 2 of the present disclosure differs from Embodiment 1 in that the one or more overflow openings further comprise a second overflow opening 208, a third overflow opening 209 and a fourth overflow opening 210 disposed below the first overflow opening 204, the first overflow opening 204 is the large-diameter overflow opening, and the second overflow opening 208, the third overflow opening 209 and the fourth overflow opening 210 are all small-diameter overflow openings. The first overflow opening 204 is disposed on the side of the top of the lower base body 201, a position of a water exhaust opening of the toilet base is limited due to a positional relationship of the first overflow opening 204, which may lead to a limitation of a layout of the toilet base, while other overflow openings are disposed below the first overflow opening 204, which is beneficial to a diversification of the layout of the toilet base. The first overflow opening 204 is in the constantly open state, the second overflow opening 208, the third overflow opening 209 and the fourth overflow opening 210 can be selectively opened or closed, and any of the one or more overflow openings can be selected to exhaust the water according to an actual layout of the lower base 200. Therein, positions of the second overflow opening 208, the third overflow opening 209 and the fourth overflow opening 210 need to be guaranteed to be lower than the first overflow opening 204. An exhausting flow rate of the second overflow opening 208, the third overflow opening 209 and the fourth overflow opening 210 needs to be greater than a specified overflow flow rate. In a case with specified overflow requirements, only the first overflow opening 204 can be selected to be opened. In other cases in which the first overflow opening 204 cannot be used, the other overflow openings can be selected to be opened, and the opened overflow openings is used for exhausting water. In one example, the second overflow opening 208 is configured to be disposed on the side wall of the lower base body 201 above the air exhausting opening 203. The third overflow opening 209 is disposed on the side wall of the lower base body 201 around a lower part of the first overflow opening 204, and the fourth overflow opening 210 is disposed opposite to the third overflow opening 209. In other embodiments, the positions of the second overflow opening 208, the third overflow opening 209 and the fourth overflow opening 210 can be adjusted according to the layout of the toilet base and the like.

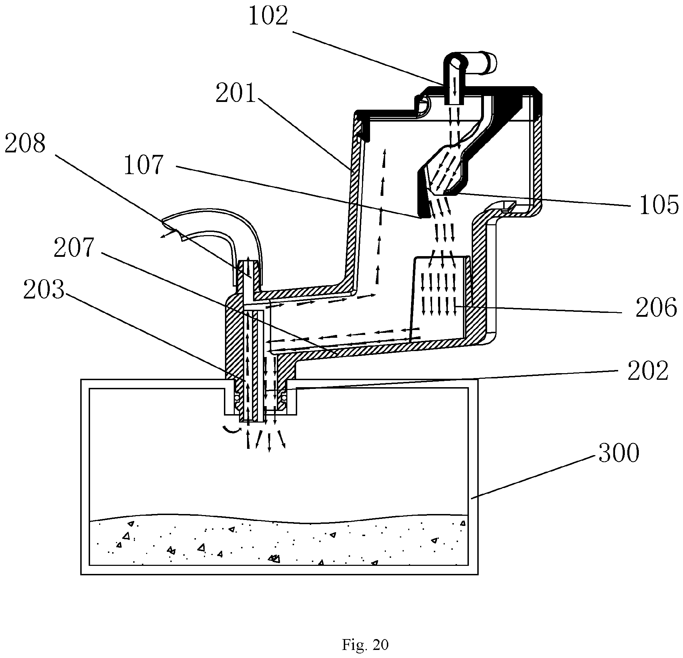

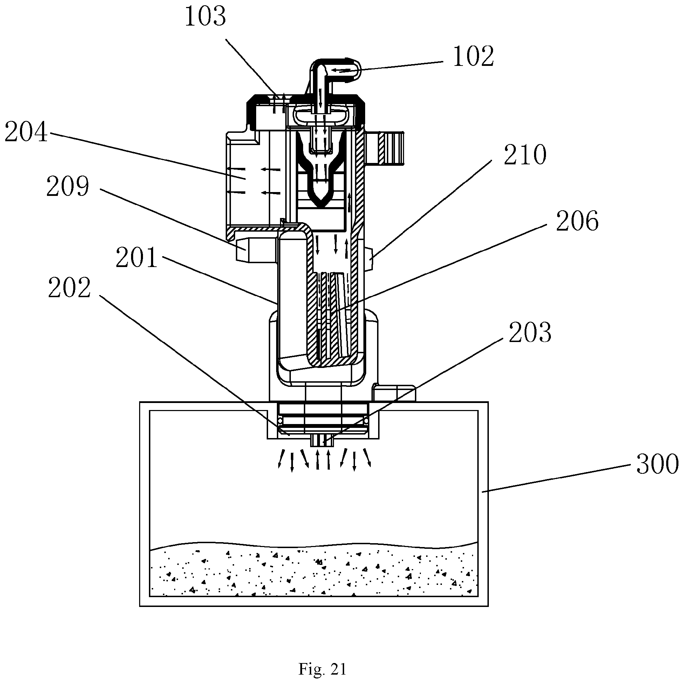

In a detailed embodiment, referring to Figs. 20 and 21, in the normal water inflow process, in addition to that the air is configured to be exhausted from the first overflow opening 204, the air is configured to be exhausted from any opened overflow opening of the second overflow opening 208, the third overflow opening 209 and the fourth overflow opening 210.

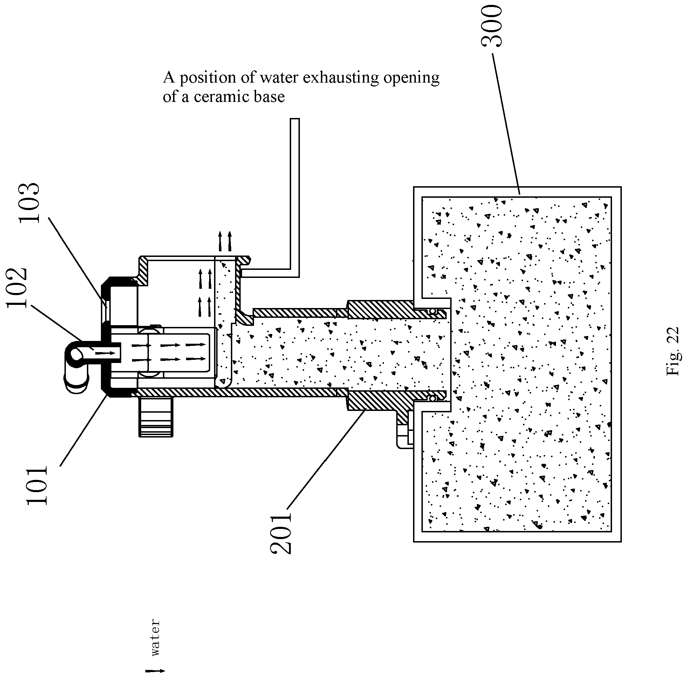

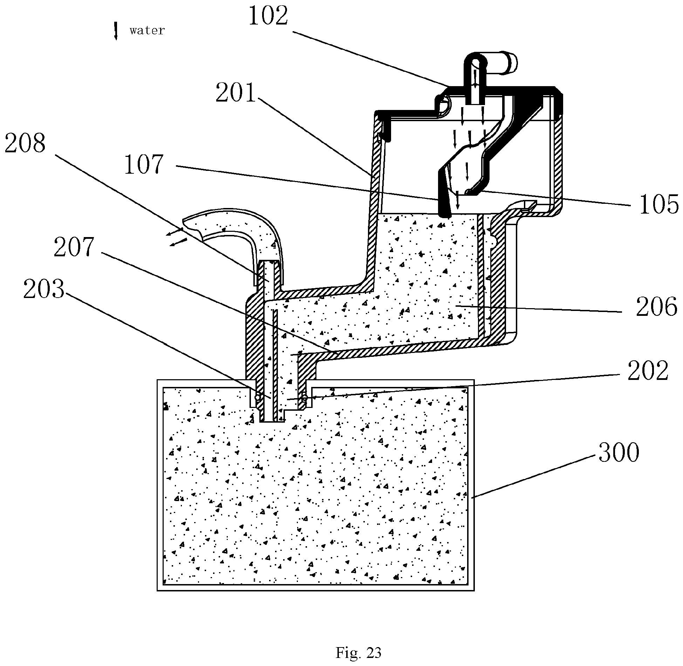

In detail, referring to Fig. 22, when an overflow occurs in the water tank 300 and only the first overflow opening 204 is used to exhaust water, and the corresponding water exhaust opening of the toilet base will also be limited by the position of the first overflow opening 204. Referring to Fig. 23, when the second overflow opening 208 is provided and the second overflow opening 208 is opened, the second overflow opening 208 is connected to a silicone tube, the other end of the silicone tube is connected to the water exhaust opening of the toilet base, so that the water can continuously flow into the water tank 300 under abnormal conditions, the water overflowing from the water tank 300 flows into the silicone tube through the second overflow opening 208, and the water finally is exhausted from the water exhaust opening of the toilet base through the silicone tube. When an overflow rate of the second overflow opening 208 does not satisfy the overflowing water, the third overflow opening 209 or the fourth overflow opening 210 can be supplementally opened to ensure that the overflowing water to overflow from other overflow openings without overflowing from the first overflow opening 204. There is no priority order for use in three overflow openings of the second overflow opening 208, the third overflow opening 209 and the fourth overflow opening 210 as long as the layout of the toilet base and an operation convenience of employees are satisfied. Therefore, an application scene of the toilet base is broadened, and it can be applied to a wider variety of toilet bases to meet requirements of different overflow openings and different toilet bases, and a general versatility is strengthened.

The present invention may be summarized as follows: the present disclosure discloses a device for preventing siphonage and overflow, a toilet water passage system and a toilet, the device for preventing the siphonage and the overflow is configured to be disposed on a water tank of a toilet, it specifically comprises an upper cover and a lower base, the upper cover is disposed on the lower base to define a cavity with an inner portion of the lower base, the upper cover comprises a cover body, a water inlet, an air opening and a first flow transmission structure, the water inlet and the air opening are both disposed on the cover body, the lower base comprises a lower base body, a water outlet, an air exhausting opening, one or more overflow openings and a second flow transmission structure, the water outlet and the air exhausting opening are disposed on a bottom of the lower base body and are in communication with an inner portion of the water tank, the second flow transmission structure is disposed below the first flow transmission structure, in a normal water inflow process, water from the water inlet flows into the cavity and flows into the inner portion of the water tank through the first flow transmission structure, the second flow transmission structure and the water outlet in sequence, and air in the water tank flows into the cavity through the air exhausting opening and is exhausted through the one or more overflow openings and the air opening; when the overflow occurs in the water tank and a water level is higher than the one or more overflow openings, the water is exhausted from the one or more overflow openings. Two functions of preventing the siphonage and preventing the overflow can be integrated into one structure. The above embodiments are only used to further illustrate a technique solution of the present disclosure, but the present disclosure is not limited to the embodiments. Thus, it is intended that the present disclosure cover any modifications and variations of the presently presented embodiments provided they are made without departing from the appended claims and the specification of the present disclosure.

## Claims

1. A device for preventing siphonage and overflow, it is configured to be disposed on a water tank (300) of a toilet, **characterized in that**: it comprises an upper cover (100) and a lower base (200), the upper cover is disposed on the lower base to define a cavity with an inner portion of the lower base, the upper cover comprises a cover body (101), a water inlet (102), an air opening (103) and a first flow transmission structure (104),
the water inlet and the air opening are both disposed on the cover body, the first flow transmission structure is disposed below the cover body, the lower base comprises a lower base body (201), a water outlet (202), an air exhausting opening (203), one or more overflow openings (204) and a second flow transmission structure (205,206,207)
the water outlet and the air exhausting opening are disposed on a bottom of the lower base body and are in communication with an inner portion of the water tank, the second flow transmission structure is disposed below the first flow transmission structure, in a normal water inflow process, when installed,
water from the water inlet flows into the cavity and flows into the inner portion of the water tank through the first flow transmission structure, the second flow transmission structure and the water outlet in sequence, and air in the water tank flows into the cavity through the air exhausting opening and is exhausted through the one or more overflow openings and the air opening; when the overflow occurs in the water tank and a water level is higher than the one or more overflow openings, the water is exhausted from the one or more overflow openings.

2. The device for preventing the siphonage and the overflow according to claim 1, **characterized in that**: the first flow transmission structure comprises an aqueduct (105),
the aqueduct is disposed below the water inlet, a bottom of the aqueduct comprises a water transmission surface and an opening, and two sides of the bottom of the aqueduct comprises shielding ribs (107).

3. The device for preventing the siphonage and the overflow according to claim 2, **characterized in that**: a connection plate (106)
is disposed between the aqueduct and the cover body, a side of the connection plate facing the water inlet defines a recess, and a space for a given position is defined between the recess and the water inlet.

4. The device for preventing the siphonage and the overflow according to any one or more of claims 2 to 3, **characterized in that**: the second flow transmission structure comprises a mild-flowing grid (206) and a mild-flowing passage (207),
the mild-flowing grid comprises a plurality of partition plates protruding from a side wall of the lower base body, the plurality of partition plates are partitioned to define a grid structure, a bottom of the grid structure is in communication with the mild-flowing passage, and an end of the mild-flowing passage is connected to the water outlet.

5. The device for preventing the siphonage and the overflow according to any one or more of claims 2 to 4, **characterized in that**: an edge of the opening of the aqueduct extends downward to define a water shielding rib, and the water shielding rib is configured to guide , in use,
the water in the aqueduct to the mild-flowing grid.

6. The device for preventing the siphonage and the overflow according to claim 4 and/or 5, **characterized in that**: a bottom of the lower base is partitioned to define the air exhausting opening and the water outlet by a rib, and a top of the rib is higher than a bottom surface of the mild-flowing passage.

7. The device for preventing the siphonage and the overflow according to any one or more of claims 1 to 6, **characterized in that**: the one or more overflow openings comprise a first overflow opening (204),
and the first overflow opening is disposed on a side of a top of the lower base body and maintains constantly open.

8. The device for preventing the siphonage and the overflow according to claim 7, **characterized in that**: the one or more overflow openings further comprise a second overflow opening (208), a third overflow opening (209) and a fourth overflow opening (210) disposed below the first overflow opening, the first overflow opening is a large-diameter overflow opening, the second overflow opening, the third overflow opening and the fourth overflow opening are all small-diameter overflow openings, and the second overflow opening, the third overflow opening and the fourth overflow opening are configured to be selectively opened or closed.

9. The device for preventing the siphonage and the overflow according to any one or more of claims 1 to 8, **characterized in that**: the cover body is connected to the lower base body by a snap connector, and a sealing ring is disposed between the bottom of the lower base body and the water tank.

10. A toilet water passage system comprising a water inlet pipeline, the water tank (300) and the device
for preventing the siphonage and the overflow according to any one or more of claims 1-9, **characterized in that**: the water inlet pipeline is connected to the water inlet, and the bottom of the lower base body is connected to the water tank.

11. A toilet comprising a toilet body, **characterized in that**: it further comprises the toilet water passage system according to claim 10, and the toilet water passage system is disposed on the toilet body.

## Patentansprüche

1. Eine Einrichtung zur Verhinderung von Rücksaugen und Überlauf, sie ist konfiguriert, um auf einem Wassertank (300) einer Toilette angeordnet zu werden, **dadurch gekennzeichnet, dass**: sie eine obere Abdeckung (100) und eine untere Basis (200) aufweist, die obere Abdeckung ist auf der unteren Basis angeordnet, um einen Hohlraum mit einem inneren Teil der unteren Basis zu definieren, die obere Abdeckung weist einen Abdeckungskörper (101), einen Wassereinlass (102), eine Luftöffnung (103) und eine erste Strömungsübertragungsstruktur (104) auf, der Wassereinlass und die Luftöffnung sind beide auf dem Abdeckungskörper angeordnet, die erste Strömungsübertragungsstruktur ist unter dem Abdeckungskörper angeordnet, die untere Basis weist einen unteren Basiskörper (201), einen Wasserauslass (202), eine Luftablassöffnung (203), eine oder mehrere Überlauföffnungen (204) und eine zweite Strömungsübertragungsstruktur (205, 206, 207) auf, der Wasserauslass und die Luftablassöffnung sind auf einem unteren Teil des unteren Basiskörpers angeordnet und stehen mit einem inneren Teil des Wassertanks in Verbindung, die zweite Strömungsübertragungsstruktur ist unter der ersten Strömungsübertragungsstruktur angeordnet, in einem normalen Wassereinflussprozess, wenn installiert, strömt Wasser von dem Wassereinlass in den Hohlraum und strömt in den inneren Teil des Wassertanks der Reihe nach durch die erste Strömungsübertragungsstruktur, die zweite Strömungsübertragungsstruktur und den Wasserauslass, und Luft in dem Wassertank strömt in den Hohlraum durch die Luftablassöffnung und wird durch die eine oder mehreren Überlauföffnungen und die Luftöffnung abgelassen; wenn der Überlauf in dem Wassertank auftritt, und ein Wasserstand ist höher als die eine oder mehreren Überlauföffnungen, wird das Wasser von den einen oder mehreren Überlauföffnungen abgelassen.

2. Die Einrichtung zur Verhinderung des Rücksaugens und des Überlaufs nach Anspruch 1, **dadurch gekennzeichnet, dass**: die erste Strömungsübertragungsstruktur eine Wasserleitung (105) aufweist, die Wasserleitung unter dem Wassereinlasses angeordnet ist, ein unterer Teil der Wasserleitung eine Wasserübertragungsoberfläche und eine Öffnung aufweist, und zwei Seiten des unteren Teils der Wasserleitung Abschirmrippen (107) aufweist.

3. Die Einrichtung zur Verhinderung des Rücksaugens und des Überlaufs nach Anspruch 2, **dadurch gekennzeichnet, dass**: eine Verbindungsplatte (106) zwischen der Wasserleitung und dem Abdeckungskörper angeordnet ist, eine dem Wassereinlass zugewandte Seite der Verbindungsplatte eine Ausnehmung definiert, und ein Raum für eine gegebene Position zwischen der Ausnehmung und dem Wassereinlass definiert ist.

4. Die Einrichtung zur Verhinderung des Rücksaugens und des Überlaufs nach einem oder mehreren der Ansprüche 2 bis 3, **dadurch gekennzeichnet, dass**: die zweite Strömungsübertragungsstruktur ein Sanftströmungsgitter (206) und einen Sanftströmungsdurchgang (207) aufweist, das Sanftströmungsgitter eine Vielzahl von Teilungsplatten aufweist, die von einer Seitenwand des unteren Basiskörpers hervorstehen, die Vielzahl von Teilungsplatten geteilt sind, um eine Gitterstruktur zu definieren, ein unterer Teil der Gitterstruktur mit dem Sanftströmungsdurchgang in Verbindung steht, und ein Ende des Sanftströmungsdurchgangs mit dem Wasserauslass verbunden ist.

5. Die Einrichtung zur Verhinderung des Rücksaugens und des Überlaufs nach einem oder mehreren der Ansprüche 2 bis 4, **dadurch gekennzeichnet, dass**: eine Kante der Öffnung der Wasserleitung sich nach unten erstreckt, um eine Wasserabschirmrippe zu definieren, und die Wasserabschirmrippe konfiguriert ist, um, im Gebrauch, das Wasser in der Wasserleitung zu dem Sanftströmungsgitter zu führen.

6. Die Einrichtung zur Verhinderung des Rücksaugens und des Überlaufs nach Anspruch 4 und/oder 5, **dadurch gekennzeichnet, dass**: ein unterer Teil der unteren Basis geteilt ist, um die Luftablassöffnung und den Wasserauslass durch eine Rippe zu definieren, und ein oberer Teil der Rippe höher als eine Bodenoberfläche des Sanftströmungsdurchgangs ist.

7. Die Einrichtung zur Verhinderung des Rücksaugens und des Überlaufs nach einem oder mehreren der Ansprüche 1 bis 6, **dadurch gekennzeichnet, dass**: die eine oder mehreren Überlauföffnungen eine erste Überlauföffnung (204) aufweist, und die erste Überlauföffnung an einer Seite eines oberen Teils des unteren Basiskörpers angeordnet ist und konstant geöffnet bleibt.

8. Die Einrichtung zur Verhinderung des Rücksaugens und des Überlaufs nach Anspruch 7, **dadurch gekennzeichnet, dass**: die eine oder mehreren Überlauföffnungen ferner eine zweite Überlauföffnung (208), eine dritte Überlauföffnung (209) und eine vierte Überlauföffnung (210), und zwar unterhalb der ersten Überlauföffnung angeordnet, aufweisen, die erste Überlauföffnung eine Überlauföffnung mit einem großem Durchmesser ist, die zweite Überlauföffnung, die dritte Überlauföffnung und die vierte Überlauföffnung alle Überlauföffnungen mit kleinem Durchmesser sind, und die zweite Überlauföffnung, die dritte Überlauföffnung und die vierte Überlauföffnung konfiguriert sind, um selektiv geöffnet oder geschlossen zu werden.

9. Die Einrichtung zur Verhinderung des Rücksaugens und des Überlaufs nach einem oder mehreren der Ansprüche 1 bis 8, **dadurch gekennzeichnet, dass**: der Abdeckungskörper mit dem unteren Basiskörper durch eine Schnappverbindungseinrichtung verbunden ist, und ein Dichtungsring zwischen dem unteren Teil des unteren Basiskörpers und dem Wassertank angeordnet ist.

10. Ein Toilettenwasserdurchgangssystem, das eine Wassereinlassleitung, den Wassertank (300) und die Einrichtung zur Verhinderung des Rücksaugens und des Überlaufs nach einem oder mehreren der Ansprüche 1-9 aufweist, **dadurch gekennzeichnet, dass**: die Wassereinlassleitung mit dem Wassereinlass verbunden ist, und der untere Teil des unteren Basiskörpers mit dem Wassertank verbunden ist.

11. Eine Toilette, die einen Toilettenkörper aufweist, **dadurch gekennzeichnet, dass**: sie ferner das Toilettenwasserdurchgangssystem nach Anspruch 10 aufweist, und das Toilettenwasserdurchgangssystem an dem Toilettenkörper angeordnet ist.

## Revendications

1. Dispositif destiné à prévenir un siphonnage et un débordement, configuré pour être disposé sur un réservoir d'eau (300) de toilettes, **caractérisé en ce que** : il comprend un couvercle supérieur (100) et une base inférieure (200), le couvercle supérieur est disposé sur la base inférieure pour définir une cavité avec une portion interne de la base inférieure, le couvercle supérieur comprend un corps de couvercle (101), une entrée d'eau (102), une ouverture d'air (103) et une première structure de transmission d'écoulement (104), l'entrée d'eau et l'ouverture d'air sont toutes deux disposées sur le corps de couvercle, la première structure de transmission d'écoulement est disposée sous le corps de couvercle, la base inférieure comprend un corps de base inférieure (201), une sortie d'eau (202), une ouverture d'évacuation d'air (203), une ou plusieurs ouvertures de débordement (204) et une deuxième structure de transmission d'écoulement (205, 206, 207), la sortie d'eau et l'ouverture d'évacuation d'air sont disposées sur un fond du corps de base inférieure et sont en communication avec une portion interne du réservoir d'eau, la deuxième structure de transmission d'écoulement est disposée sous la première structure de transmission d'écoulement, dans un procédé normal d'arrivée d'eau, lorsqu'il est installé, de l'eau provenant de l'entrée d'eau s'écoule dans la cavité et s'écoule dans la portion interne du réservoir d'eau à travers la première structure de transmission d'écoulement, la deuxième structure de transmission d'écoulement et la sortie d'eau en séquence, et l'air dans le réservoir d'eau s'écoule dans la cavité à travers l'ouverture d'évacuation d'air et est évacué à travers les une ou plusieurs ouvertures de débordement et l'ouverture d'air ; lorsque le débordement se produit dans le réservoir d'eau et qu'un niveau d'eau est plus élevé que les une ou plusieurs ouvertures de débordement, l'eau est évacuée par les une ou plusieurs ouvertures de débordement.

2. Dispositif destiné à prévenir le siphonnage et le débordement selon la revendication 1, **caractérisé en ce que** : la première structure de transmission d'écoulement comprend un canal (105), le canal est disposé sous l'entrée d'eau, un fond du canal comprend une surface de transmission d'eau et une ouverture, et deux côtés du fond du canal comprennent des nervures de protection (107).

3. Dispositif destiné à prévenir le siphonnage et le débordement selon la revendication 2, **caractérisé en ce que** : une plaque de liaison (106) est disposée entre le canal et le corps de couvercle, un côté de la plaque de liaison faisant face à l'entrée d'eau définit un évidement, et un espace pour une position donnée est défini entre l'évidement et l'entrée d'eau.

4. Dispositif destiné à prévenir le siphonnage et le débordement selon l'une ou plusieurs des revendications 2 à 3, **caractérisé en ce que** : la deuxième structure de transmission d'écoulement comprend une grille d'écoulement modéré (206) et un passage d'écoulement modéré (207), la grille d'écoulement modéré comprend une pluralité de plaques de séparation faisant saillie depuis une paroi latérale du corps de base inférieure, la pluralité de plaques de séparation sont séparés pour définir une structure de grille, un fond de la structure de grille est en communication avec le passage d'écoulement modéré, et une extrémité du passage d'écoulement modéré est reliée à la sortie d'eau.

5. Dispositif destiné à prévenir le siphonnage et le débordement selon l'une ou plusieurs des revendications 2 à 4, **caractérisé en ce que** : un bord de l'ouverture du canal s'étend vers le bas pour définir une nervure de protection d'eau, et la nervure de protection d'eau est configurée pour guider, lors de l'utilisation, l'eau dans le canal vers la grille d'écoulement modéré.

6. Dispositif destiné à prévenir le siphonnage et le débordement selon la revendication 4 et/ou 5, **caractérisé en ce que** : un fond de la base inférieure est séparé pour définir l'ouverture d'évacuation d'air et la sortie d'eau par une nervure, et un sommet de la nervure est plus élevé qu'une surface inférieure du passage d'écoulement modéré.

7. Dispositif destiné à prévenir le siphonnage et le débordement selon l'une ou plusieurs des revendications 1 à 6, **caractérisé en ce que** : les une ou plusieurs ouvertures de débordement comprennent une première ouverture de débordement (204), et la première ouverture de débordement est disposée sur un côté d'un sommet du corps de base inférieure et reste constamment ouverte.

8. Dispositif destiné à prévenir le siphonnage et le débordement selon la revendication 7, **caractérisé en ce que** : les une ou plusieurs ouvertures de débordement comprennent en outre une deuxième ouverture de débordement (208), une troisième ouverture de débordement (209) et une quatrième ouverture de débordement (210) disposées sous la première ouverture de débordement, la première ouverture de débordement est une ouverture de débordement de grand diamètre, la deuxième ouverture de débordement, la troisième ouverture de débordement et la quatrième ouverture de débordement sont toutes des ouvertures de débordement de petit diamètre, et la deuxième ouverture de débordement, la troisième ouverture de débordement et la quatrième ouverture de débordement sont configurées pour être ouvertes ou fermées de manière sélective.

9. Dispositif destiné à prévenir le siphonnage et le débordement selon l'une ou plusieurs des revendications 1 à 8, **caractérisé en ce que** : le corps de couvercle est relié au corps de base inférieure par un élément de liaison encliquetable, et un anneau d'étanchéité est disposé entre le fond du corps de base inférieure et le réservoir d'eau.

10. Système de passage d'eau des toilettes comprenant une canalisation d'entrée d'eau, le réservoir d'eau (300) et le dispositif destiné à prévenir le siphonnage et le débordement selon l'une ou plusieurs des revendications 1 à 9, **caractérisé en ce que** : la canalisation d'entrée d'eau est reliée à l'entrée d'eau, et le fond du corps de base inférieure est relié au réservoir d'eau.

11. Toilettes comprenant un corps de toilettes, **caractérisées en ce qu'**elles comprennent en outre le système de passage d'eau de toilettes selon la revendication 10 et que le système de passage d'eau de toilettes est disposé sur le corps de toilettes.
